# EUROPÄISCHE PATENTSCHRIFT

(11) **EP 3 771 900 B1**
(45) Veröffentlichungstag und Bekanntmachung des Hinweises auf die Patenterteilung: **19.04.2023**
(21) Anmeldenummer: 19188868.4
(22) Anmeldetag: 29.07.2019
(51) Int. Cl.: G01N 21/39, G01N 21/85

(54) **VERFAHREN ZUR BESTIMMUNG EINER GASKONZENTRATION UND MESSGERÄT**
METHOD FOR DETERMINING A GAS CONCENTRATION AND MEASURING DEVICE
PROCÉDÉ DE DÉTERMINATION D'UNE CONCENTRATION EN GAZ ET APPAREIL DE MESURE

(43) Veröffentlichungstag der Anmeldung: 03.02.2021
(73) Patentinhaber: SICK AG, 79183 Waldkirch (DE)
(72) Erfinder: Edler, Julian, 79312 Emmendingen (DE); Beyer, Thomas, 79111 Freiburg (DE); Waldmann, Torsten, 79211 Denzlingen (DE)

(56) Entgegenhaltungen:
- EP-A1- 3 364 169
- DE-A1-102011 080 086
- DE-A1-102015 215 411
- SILVER J A: "FREQUENCY-MODULATION SPECTROSCOPY FOR TRACE SPECIES DETECTION: THEORY AND COMPARISON AMONG EXPERIMENTAL METHODS", APPLIED OPTICS, OPTICAL SOCIETY OF AMERICA, WASHINGTON, DC; US, Bd. 31, Nr. 6, 20. Februar 1992 (1992-02-20), Seiten 707-717, XP000248585, ISSN: 0003-6935, DOI: 10.1364/AO.31.000707

## Beschreibung

Die Erfindung betrifft ein Verfahren zur Bestimmung einer Gaskonzentration in einem Messvolumen und ein Gaskonzentrationsmessgerät zur Durchführung des Verfahrens.

Aus der gattungsbildenden EP 3 364 169 A1 ist ein Messgerät bekannt, bei dem ein Messgasgemisch mit dem Licht einer wellenlängendurchstimmbaren Laserdiode (TDL) durchstrahlt wird und die Konzentration von Sauerstoff in dem Messgas anhand der durch die Absorption des Lichts an der Stelle einer ausgewählten Absorptionslinie der Gaskomponente hervorgerufenen Minderung der Lichtintensität bestimmt. Dabei wird die Laserdiode periodisch mit einer dreieck- oder sägezahnförmigen Strom-Zeit-Funktion (Stromrampe) angesteuert, um die Absorptionslinie der Gaskomponente wellenlängenabhängig abzutasten. Zur Erhöhung der Messgenauigkeit wird die Strom-Zeit-Funktion mit einem sinusförmigen Signal vorgegebener Frequenz f und Amplitude moduliert und das Licht bei einer höheren Harmonischen der Frequenz, üblicherweise der doppelten Frequenz 2f, phasensensitiv detektiert und ausgewertet (sogenannte Wellenlängenmodulationsspektroskopie oder WMS). Bei kleiner Modulationsamplitude ist der 2f-Signalanteil direkt proportional zu der zweiten Ableitung des Detektorsignals. Aus dem aufgenommenen Absorptionsspektrum (2f-Signal) wird schließlich die Konzentration der zu messenden Gaskomponente bestimmt.

Eine detaillierte Theorie, die die WMS und die Beziehungen zwischen der Form der Absorptionslinie und der Form des demodulierten Signals beschreibt, ist in "Frequency-modulation spectroscopy for trace species detection: theory and comparison among experimental methods," Applied Optics 31, 707-717(1992) gegeben. Die Signalform, die bei der WMS erhalten wird, wenn man langsam über die Absorptionslinie fährt und gleichzeitig die Wellenlänge bei der Frequenz nf moduliert, entspricht qualitativ der n-ten Ableitung der Absorptionslinie, weswegen für die WMS auch die Bezeichnung derivative Absorptionsspektroskopie verwendet wird. Im Folgenden wird der Begriff "Absorptionslinie" synonym gebraucht für das Messsignal in irgendeiner Form, wenn man über die Absorption fährt. Mit "Absorptionslinie" im Sinne der Erfindung ist also ein Absorptionssignal gemeint, dass ein Signal der direkten Absorption sein kann oder ein 1f-, 2f- oder nf-Signal.

Bei vielen Applikationen soll das Messgerät (auch TDLS Gerät genannt) eine Explosionsgrenze eines Gasgemischs überwachen. Dies geschieht typischerweise durch die Überwachung der Sauerstoffkonzentration im Gasgemisch. Der dabei zu überwachende Sauerstoffanteil liegt typischerweise bei ca. 1-4 Vol.%. Wird diese Grenze überschritten so besteht in den Anlagen ein explosionsfähiges Gemisch. Der Sensor muss daher möglichst geringe Konzentrationen, typischerweise < 1 Vol.%, mit einer Auflösung < 0.1 Vol.% erkennen, um explosionsfähige Gemische sicher auszuschlie-βen.

Der Sauerstoffanteil in der Umgebungsluft ist jedoch deutlich höher und liegt bei ca. 20.9 Vol.%. Typischerweise werden die TDLS Geräte so aufgebaut, dass sich in den Sendern und Empfängereinheiten, in denen sich die Laser und Detektoren befinden, zwischen den Glasoptiken (Linsen, Fenster etc.) und dem Laser bzw. dem Empfänger, Luftstrecken befinden. Dies kann dazu führen, dass das Absorptionssignal aus dem Bereich mit Umgebungsluft größer ist, als das Absorptionssignal aus dem Prozess. Für andere Gaskomponenten, die sich in Luft befinden, wie z.B. Wasser, Stickstoff und CO₂ ergibt sich dasselbe.

Der Laserstrahl verläuft also sowohl durch die Messstrecke (typischerweise eine Prozessleitung, z.B. in der petrochemischen Industrie) mit dem zu bestimmenden Anteil der Gaskomponente, als auch durch die Strecken im Gerät mit Umgebungsluft und wechselwirkt dabei mit den Molekülen der zu messenden Gaskomponente in der Umgebungsluft. Daher kommt es bei der Messung zu einer spektralen Überlagerung von Absorptionslinien der Gaskomponente, die von der Gaskomponente aus der Messstrecke herrühren und von der Gaskomponente aus Umgebungsluft. Diese Absorptionslinien entsprechen Gasen, die unterschiedliche Temperaturen, Drücke und Konzentrationen aufweisen. Beispielsweise liegt der Druck in der Umgebungsluft typischerweise bei 1020 hPa +/- 200 hPa und der Druck in einer Prozessleitung zwischen 100 hPa und 5000 hPa. Die Temperaturen in der Umgebung liegen zwischen -40 und +60°C und die in der Prozessleitung typischerweise zwischen 0° und 600°C.

Die Absorptionslinien der zu messenden Gaskomponente unterscheiden sich unter den verschiedenen Umgebungsbedingungen in der Intensität (abhängig von Konzentration und Temperatur) und der Form (abhängig von Temperatur, Druck und weitere Gaskomponenten, z.B. CO₂ oder H₂O im Prozessgas). Solche unterschiedlichen Linien werden bei der Messung also spektral überlagert. Der Auswertealgorithmus muss nun diese Überlagerung auflösen oder den Effekt der Überlagerung korrigieren.

Die EP 3 364 169 A1 schlägt dazu vor, den Einfluss von Luftsauerstoff in den Messköpfen, die an diametral gegenüberliegenden Seiten eines Anlagenteils mit einem darin geführten Prozessgas montiert sind, dadurch zu kompensieren, dass
- in wenigstens einem der beiden Messköpfe ein Temperatursensor angeordnet ist;
- in einem Speicher einer Auswerteeinrichtung bei unterschiedlichen Temperaturen und ohne Prozessgasgemisch aufgenommene Umgebungs-Referenzspektren der in den beiden Messköpfen enthaltenen Umgebungsluft abgespeichert sind;
- die Auswerteeinrichtung dazu ausgebildet ist, eines der abgespeicherten Umgebungs-Referenzspektren in Abhängigkeit von der mit dem Temperatursensor erfassten aktuellen Temperatur auszuwählen oder aus zwei abgespeicherten Umgebungs-Referenzspektren zu berechnen
- und es von dem aktuell detektierten Absorptionsspektrum des Prozessgasgemischs zu subtrahieren und aus dem Differenzspektrum die Sauerstoffkonzentration in dem Prozessgasgemisch zu bestimmen.

Nachteilig ist, dass eine Vielzahl von Spektren gespeichert sein muss und das Umgebungsspektrum an Hand der aktuellen Umgebungsfeuchte, -druck, -temperatur aus einer Datenbank ausgewählt werden muss.

Aufgabe der Erfindung ist es, ein Verfahren bereitzustellen, bei dem eine möglichst einfache und exaktere Korrektur der überlagerten Umgebungsluft erfolgen kann und ein entsprechendes Messgerät bereitzustellen.

Diese Aufgabe wird gelöst durch ein Verfahren mit den Merkmalen des Anspruchs 1 und ein Gaskonzentrationsmessgerät mit den Merkmalen des Anspruchs 9.

Der wesentliche Vorteil ist, dass es sich dabei um eine einfachere, kostengünstigere Methode handelt, um die überlagerten Absorptionslinien der zu messenden Gaskomponente in Umgebungsluft und der zu messenden Gaskomponente im Prozessgas aufzutrennen, um somit den Effekt von der Gaskomponente aus der Umgebungsluft bei der Bestimmung der Konzentration von der zu messenden Gaskomponente im Prozessgas zu unterdrücken. Bei der zu messenden Gaskomponente handelt es sich bevorzugt um Sauerstoff, da bei Sauerstoffmessungen der Sauerstoff aus der Umgebungsluft besonders störend ist und die Erfindung für dieses "Sauerstoffproblem" ihre besonderen Vorteile ausspielt. Mit dem erfindungsgemäßen Verfahren ist nämlich eine exaktere Bestimmung der Konzentration möglich, als im Stand der Technik, bei dem ein vordefiniertes Spektrum subtrahiert wird. Nach der Erfindung wird nämlich stets das gesamte Spektrum inklusive der aktuellen, in der Messung selbst vorhandenen Umgebungsluft ausgewertet.

Dieses Verfahren ist auch einfacher und kostengünstiger, da keine Umgebungsluftreferenzspektren vorher aufgenommen oder simuliert und gespeichert werden müssen.

Dazu sind Druck- und Temperatursensoren vorgesehen, die Drücke und Temperaturen von Prozessgas und Umgebungsluft erfassen und mit denen dann Startwerte für die ersten Anpassungsparameter Linienposition und/oder Linienbreite der Gaskomponente im Prozess und Startwerte für die zweiten Anpassungsparameter Linienposition und/oder Linienbreite der Gaskomponente in der Umgebungsluft errechnet werden.

Wenn Fremdgasanteile bekannt sind können in weiterer Ausbildung die Startwerte für die Anpassungsparameter mit Kenntnis von Fremdgasanteilen eingeschränkt werden.

In einer weiteren Ausbildung wird ein Startwert für den zweiten Anpassungsparameter Linienfläche und/oder Linienhöhe der Absorptionslinie der Gaskomponente in der Umgebungsluft eingeschränkt auf Werte, die sich aus der Wegstrecke des Lichtstrahls durch das Umgebungsluftvolumen errechnen.

Auch kann eine Feuchte der Umgebungsluft mit einem Feuchtesensor erfasst werden und der Startwert des zweiten Anpassungsparameters Linienfläche und/oder Linienhöhe der Absorptionslinie der Gaskomponente in der Umgebungsluft eingeschränkt werden auf Werte, die sich aus der gemessenen Feuchte bestimmen.

Alle diese Einschränkungen für die Anpassungsparameter dienen dazu, mit wenig Aufwand ein gutes Ergebnis für die numerische Anpassung zu erhalten. Dafür kann es auch dienlich sein, wenn für die ersten und insbesondere für die zweiten Anpassungsparameter Toleranzen festgelegt sind, innerhalb derer diese beim numerischen Anpassen variieren können. Damit kann ein instabiles Anpassungsverhalten verhindert werden.

Das Absorptionsspektrum kann ein normales, direktes Absorptionsspektrum sein oder bevorzugt eines das nach den Methoden der Wellenlängenmodulationsspektroskopie gewonnen wurde, denn dieses liefert genauere Messergebnisse und kann kleinere Konzentrationen messen.

Vorteilhafterweise erstreckt sich das Absorptionsspektrum über mehr als eine Absorptionslinie der zu messenden Gaskomponente, beispielsweise über zwei oder drei Absorptionslinien. Die Anzahl der Anpassungsparameter ist dann entsprechend höher, dafür aber die Ergebnisse genauer.

In Messgeräten kann es vorkommen, dass unterschiedliche Temperaturen vorliegen oder dass es Übergänge von einer Temperatur zu einer anderen gibt. Wenn in diesen Bereichen unterschiedlicher Temperatur zum Beispiel das Umgebungsluftvolumen liegt, dann ist es in Weiterbildung der Erfindung sinnvoll, jedem dieser Bereiche separate, eigene Anpassungsparameter zuzuordnen. Das erhöht die Genauigkeit weiter.

Gegenstand der Erfindung ist auch ein Gaskonzentrationsmessgerät, mit dem das erfindungsgemäße Verfahren durchführbar ist und dass daher die gleichen Vorteile liefert.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung einer Ausführungsform des erfindungsgemäßen Messgeräts;
- Fig. 2: eine schematische Darstellung eines 2f-Signals (Absorptionsspektrum);
- Fig. 3: eine weitere Ausführungsform des erfindungsgemäßen Messgeräts;
- Fig. 4: eine "cross-duct" Ausführungsform des erfindungsgemäßen Messgeräts.

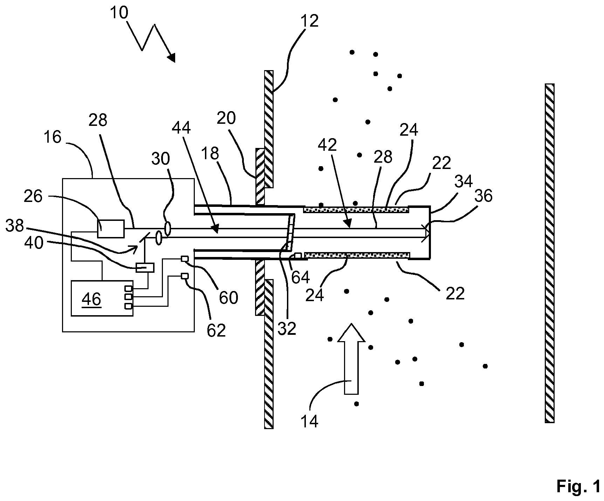

Ein erfindungsgemäßes Gaskonzentrationsmessgerät 10 dient zur Bestimmung einer Konzentration einer Gaskomponente, insbesondere Sauerstoff, in einem Prozessgas. In dem in Fig. 1 dargestellten Beispiel strömt das Prozessgas in einem Prozesskanal 12. Der Prozessgasstrom ist mit Pfeil 14 angedeutet. Das Messgerät 10 umfasst ein Gehäuse 16, das über ein lanzenartiges Messrohr 18, das einen Flansch 20 aufweist, gehalten ist. Der Flansch 20 ist außen an dem Prozesskanal 12 montiert. Das lanzenartige Messrohr 18 ragt in das Innere des Prozesskanals 12 hinein und weist Öffnungen 22 auf, durch die Prozessgas in das Innere des Messrohres 18 gelangen kann. Die Öffnungen 22 weisen Filter 24 auf, so dass störende Partikel, wie Staub, Tröpfen oder dergleichen, die als Punkte angedeutet sind, nicht in das Messrohr 18 gelangen können.

In dem Gehäuse 16 ist eine durchstimmbare Laserlichtquelle 26 angeordnet, vorzugsweise ein TDL (Tunable Diode Laser), der einen Sendelichtstrahl 28 emittiert, der mittels optischer Elemente 30 durch ein Fenster 32 in das Messrohr 18 koaxial geführt ist. Das Fenster 32 trennt das Innere des Gehäuses 16 von dem Inneren des Messrohres 18. Am anderen Ende 34 des Messrohres 18 (in Fig. 1 das rechte Ende) ist eine Umlenkeinheit 36 angeordnet, durch die das Licht in das Gehäuse 16 durch das Fenster 30 zurückgeführt wird. Über eine Optik 38, z.B. bestehend aus Linse und Umlenkspiegel wird das zurückreflektierte Licht auf einen Lichtempfänger 40 (im Folgenden auch einfach Empfänger genannt) fokussiert geführt.

In dem Messrohr 18 bildet der Sendelichtstrahl 28 und der zurückreflektierte Teil des Lichtstrahls ein Messvolumen 42, indem das Licht von im Messvolumen 42 vorkommendem Prozessgas absorbiert werden kann. Dazu enthält ein durchstimmbarer Wellenlängenbereich [λ1, λ2] der Laserlichtquelle 26 wenigstens eine Absorptionslinie von der zu messenden Gaskomponente.

Bei der Führung des Lichtstrahls 28 von der Laserlichtquelle 26 zum Empfänger 40 tritt der Lichtstrahl 28 auch durch Umgebungsluft hindurch. Dieser Bereich, in dem Ausführungsbeispiel der Fig. 1 ist das der Bereich des Lichtstrahls 28 innerhalb des Gehäuses 16, wird im Rahmen dieser Anmeldung auch Umgebungsluftvolumen 44 genannt. Das Umgebungsluftvolumen 44 ist wie das Messvolumen 42 durch die Ausdehnung des Lichtstrahls 28 definiert.

Da im Umgebungsluftvolumen 44 auch das zu messende Gas vorliegt erfolgt auch dort eine Absorption. Diese Absorption ist störend, so dass die Erfindung sich damit beschäftigt, die dadurch entstehende Verfälschung der Messergebnisse zu berücksichtigen. Da z.B. für Sauerstoff, der Sauerstoffanteil in der Luft mit ca. 20.9 Vol% sehr hoch ist, liefert diese an sich ungewünschte Absorption in einem Absorptionsspektrum häufig einen erheblich größeren Beitrag zur Absorption als die eigentlich zu messende Absorption im Messvolumen 42. Ähnliches würde z.B. auch bei der Messung von Spurenfeuchte in einem Prozess im Vergleich zu Umgebungsfeuchte gelten.

Die Kompensation erfolgt in einer Auswerteeinheit 46, was im Folgenden erläutert werden soll.

Das erfindungsgemäße Messgerät 10 arbeitet vorzugsweise nach der Methode der WMS. Eine nicht dargestellte Steuereinheit, die sinnvollerweise in der Auswerteeinheit 46 integriert ist, steuert den Steuerstrom für die Laserlichtquelle 26 zum Durchstimmen des Wellenlängenbereichs und Modulieren der Wellenlänge wie eingangs beschrieben.

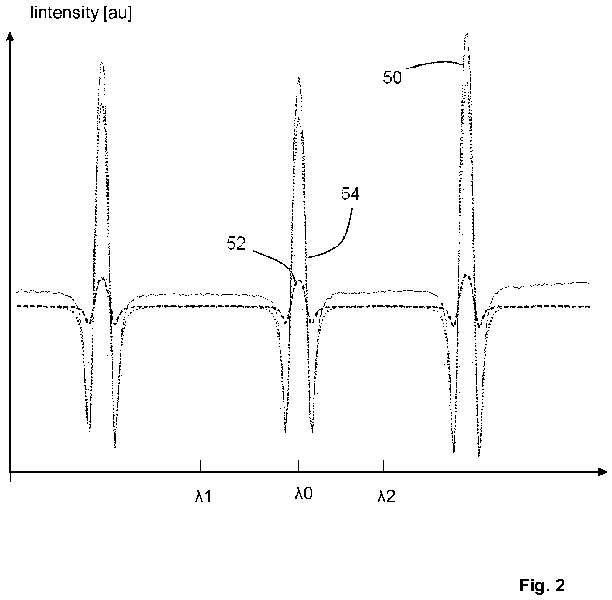

Das ausgesandte Licht wird wie oben beschrieben nach Durchlaufen des Messvolumens und des Umgebungsluftvolumens von dem Empfänger 40 empfangen, der in Abhängigkeit des empfangenen Lichts Empfangssignale erzeugt, die der Auswerteeinheit 46 zugeführt werden. Die Auswerteeinheit 46 erzeugt aus den Empfangssignalen Messwerte, die ein Absorptionsspektrum 50 bilden, wie es beispielsweise in Fig. 2 dargestellt ist. In diesem Beispiel ist das das 2f-Signal ("Absorptionslinie"). Bei einer Wellenlänge λ0 liegt eine Absorption der zu messenden Gaskomponente in dem Wellenlängenbereich [λ1, λ2].

Dieses Spektrum 50 (durchgezogene Linie) ist ein Gesamtspektrum und enthält die Absorption der Gaskomponente im Prozess aus dem Messvolumen 42 und die Absorption der Gaskomponente aus dem Umgebungsluftvolumen 44.

Um letztendlich auf die Absorption der Gaskomponente im Prozess zu kommen und damit auf die gesuchte Konzentration der Gaskomponente im Prozess wird das Gesamtspektrum 50 in bestimmter Weise numerisch angepasst. Dabei wird so getan, als lägen zwei verschiedene Gase vor, nämlich die Gaskomponente im Prozess und die Gaskomponente in Umgebungsluft. Jedes dieser Gase erhält eigene Anpassungsparameter, die es bei der numerischen Anpassung zu bestimmen gilt. Die Gaskomponente im Prozess hat erste Anpassungsparameter die Linienposition, Linienbreite und Linienfläche und/oder Linienhöhe der Absorptionslinie der Gaskomponente im Prozess und die Gaskomponente in Umgebungsluft hat zweite Anpassungsparameter, nämlich die Linienposition, Linienbreite und Linienfläche und/oder Linienhöhe der Absorptionslinie der Gaskomponente in Umgebungsluft. Linienposition und Linienbreite sind obligatorische Anpassungsparameter sowie auch zumindest einer der Parameter Linienfläche und Linienhöhe. Mit Linienhöhe ist das gemeint, was der Fachmann darunter versteht, nämlich der Messwert/Funktionswert der Absorptionslinie bei einer bestimmten Wellenlänge.

Mit den so ermittelten Anpassungsparametern kann die Konzentration der Gaskomponente im Prozess bestimmt werden, insbesondere aus dem sich ergebenden Anpassungsparameter Linienfläche der Gaskomponente im Prozess. Die Separation zwischen Gaskomponente im Prozess und Gaskomponente in Umgebungsluft, also die Kompensation des "Fehlers" durch die Absorption der Gaskomponente in Umgebungsluft, erfolgt somit durch das Vorsehen unterschiedlicher Anpassungsparameter für die Gaskomponente im Prozess und in Umgebungsluft.

Mit den erhaltenen Anpassungsparametern lassen sich dann auch separate 2f-Signale für die Gaskomponente im Prozess und die Gaskomponente in Umgebungsluft kreieren und darstellen, wie dies in Fig. 2 mit den Kurven 52 für die Gaskomponente im Prozess (gestrichelte Linie) und 54 für die Gaskomponente in Umgebungsluft (punktierte Linie) gemacht wurde.

Um Rechenzeit zu sparen und um eine stabile numerische Anpassung zu erhalten, werden Vorkenntnisse bzgl. der Anpassungsparameter eingebracht, um dadurch die Varianz bestimmter Anpassungsparameter einzuschränken. Durch Vorkenntnisse werden die Startwerte gesetzt und auch erlaubte Toleranzen, in denen sich Anpassungsparameter während der numerischen Anpassung bewegen können, gesetzt. Solche Vorgaben betreffen insbesondere die Gaskomponente in Umgebungsluft, denn die Bedingungen im Umgebungsluftvolumen 44 sind meist gut bekannt.

Die zweiten Anpassungsparameter der Gaskomponente in Umgebungsluft sind größtenteils abhängig von Einflussgrößen wie Druck, Temperatur, Fremdgasen, Feuchte oder Wegstrecke im Umgebungsluftvolumen 44. Um Werte für diese Einflussgrößen zu bestimmen sind ein Druck- und Temperatursensor 60 sowie ein Feuchtesensor 62 im Gehäuse 16 vorgesehen, deren Messwerte direkt der Auswerteinheit 46 zugeführt sind. So kann beispielsweise vorgegeben werden, dass die numerische Anpassung für die Umgebungsluft nur Werte für Temperaturen erlaubt, die +/- 2°C um den gemessenen Wert variieren dürfen.

Da die Menge der Gaskomponente in Umgebungsluft und damit die Linienfläche der Absorption der Gaskomponente in Umgebungsluft abhängig ist von der Größe des Umgebungsvolumens, also insbesondere der Wegstrecke im Gehäuse 16, lässt sich mit Kenntnis der Wegstrecke die Linienfläche einschränken. Aber auch die Linienposition hat eine geringe Abhängigkeit von Druck, Temperatur und Fremdgasen, so dass man auch diesen Anpassungsparameter für die Gaskomponente in Umgebungsluft einschränken kann. Die Feuchte beeinflusst auch die Konzentration der Gaskomponente in Umgebungsluft, so dass der Anpassungsparameter Linienfläche auch dadurch eingeschränkt werden kann.

Auch die Anpassungsparameter für die Gaskomponente im Prozess lassen sich durch Kenntnis von Einflussgrößen einschränken, so dass auch im Bereich des Messvolumens 42 ein Druck- und Temperatursensor 64 angeordnet ist, der vorzugsweise zusätzlich die Feuchte misst und dessen Messwerte an die Auswerteeinheit 46 übermittelt werden

Nicht nur durch Messen der Einflussgrößen können die Anpassungsparameter eingeschränkt werden. In einer Ausführungsform könnten Startwerte insbesondere der zweiten Anpassungsparameter durch spezielle Messungen bestimmt werden. Dazu wird in regelmäßigen Zeitintervallen das Messvolumen 42 mit einem Inertgas (zum Beispiel N2), das keine Absorptionslinien im untersuchten Bereich zeigt, gespült. Das dann aufgenommene Absorptionsspektrum wird numerisch angepasst, wobei ausschließlich die Gaskomponente in Umgebungsluft numerisch angepasst wird. Die numerische Anpassung liefert dann optimierte Parameter für die zweiten Anpassungsparameter Linienbreite, Linienposition und Linienfläche. Diese zweiten Anpassungsparameter werden nun gespeichert und als Startwerte für die numerische Anpassung für die Gaskomponente in Umgebungsluft in der nachfolgenden richtigen Messung, in der Messvolumen 42 wieder mit Prozessgas beaufschlagt wird, verwendet. Die numerische Anpassung kann nun die Werte in festgelegten Toleranzbereichen numerisch anpassen.

Eine solche "Kalibration" kann auch bei der Herstellung des Messgerätes 10 im Werk erfolgen, um die Wegstrecken innerhalb des Gehäuses zu bestimmen und so bereits beim ersten Einsatz Startwerte für die zweiten Anpassungsparameter zu haben. Mit genauer Kenntnis der Wegstrecken im Gehäuse 16 kann man auch Änderungen der Wegstrecke durch thermische Ausdehnungen berücksichtigen.

In einer weiteren Ausführungsform erstreckt sich der durchstimmbare Wellenlängenbereich [λ1, λ2] über mehr als eine Absorptionslinie der Gaskomponente, beispielsweise über zwei oder drei Absorptionslinien. Auch hier wird wieder durch entsprechende Anzahl Anpassungsparameter getrennt in Absorption der Gaskomponente im Prozess und Absorption der Gaskomponente in Umgebungsluft. Dadurch kann gegebenenfalls eine höhere Genauigkeit erzielt werden.

Das in Fig. 1 dargestellte Messgerät 10 ist nur schematisch und auch vereinfacht dargestellt.

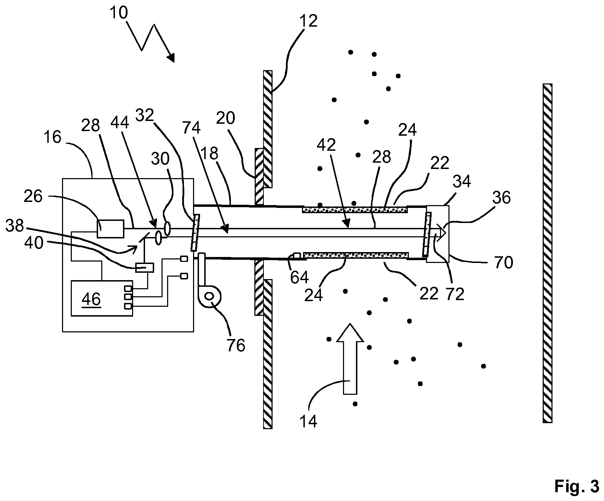

Eine andere Ausführungsform zeigt Fig. 3. Zwar ist diese Darstellung immer noch schematisch und vereinfacht, aber etwas realistischer ist in dieser Ausführungsform die Umlenkeinheit 36 in einem schützenden Reflektorgehäuse 70 angeordnet und das Fenster 32 des Gehäuses 16 befindet sich in etwas geschützterer Position zurückgezogen von dem Messvolumen, in dem häufig aggressive und verschmutzte Prozessgase vorliegen. Dass bedeutet aber auch, dass im Reflektorgehäuse 70 ein weiteres zweites Umgebungsluftvolumen 72 vorhanden ist. Auch ein Bereich 74 zwischen dem eigentlichen Messvolumen 42, das im Bereich der Öffnungen 22 liegt und dem Fenster 32 kann als drittes Umgebungsluftvolumen 74 bezeichnet werden, insbesondere, wenn eine Spülluftvorrichtung 76 vorhanden ist, die das Fenster 32 vor Verschmutzung durch Ablagerungen aus dem Prozessgas schützt.

In einem solchen Fall werden die Absorptionen weiter aufgetrennt. Es wird nämlich im Prozess der numerischen Anpassung so getan, als lägen vier Gase vor, nämlich die Gaskomponente im Prozess, die Gaskomponente aus dem ersten Umgebungsluftvolumen 44 im Gehäuse 16, aus dem zweiten Umgebungsluftvolumen 72 im Reflektorgehäuse 70 und aus dem dritten Umgebungsluftvolumen 74. Es werden also vier Absorptionslinien numerisch angepasst. Jedes der drei Umgebungsluftvolumen hat verschiedene Umgebungsbedingungen. Das zweite Umgebungsluftvolumen 72 wird eine Temperatur haben, die im Bereich der Temperatur des Prozessgases liegt. Das dritte Umgebungsluftvolumen 74 wird eine Temperatur haben, die zwischen der Temperatur im Gehäuse 16 und der im Messvolumen 44 liegt.

Die Temperatur für diese Linie kann mit dem Sensor 64 gemessen werden oder, wenn ein solcher nicht vorhanden ist, aus den Temperaturen der Prozessleitung 12 und des Gehäuses 16 gemittelt werden.

In Weiterbildung kann eine spektrale Basislinie beim numerischen Anpassen berücksichtigtwerden. Dadurch werden Krümmungen im Spektrum berücksichtigt, die durch Nichtlinearitäten der Detektoren oder Laser oder durch andere optische Absorptionen oder Etalon-Effekte hervorgerufen sein können.

Es kann theoretisch auch Schwierigkeiten bereiten, die Absorptionsstrecken erfindungsgemäß zu trennen. Wenn dies der Fall ist kann durch Herstellen von künstlichen physikalischen Bedingungen, die das Trennen von Absorptionsstrecken erlauben, abgeholfen werden. Es werden dann physikalische Parameter in mindestens einer Strecke derart verändert, dass die Absorptionslinien gut trennbar sind. Beispielsweise kann durch Druckänderung in mindestens einer Strecke eine unterschiedliche Linienbreite erzeugt werden. Ebenso kann z.B. durch Einbringen eines stark fremd-verbreiternden Gases in mindestens einer Strecke dort die Linienbreite des gemessenen Gases verändert werden.

Eine gute Trennung kann auch erreicht werden, wenn man einen Spektralbereich wählen kann, in dem mindestens zwei Absorptionslinien der Gaskomponente mit unterschiedlicher Temperaturabhängigkeit liegen. Eine der Absorptionslinien hat bei hohen Temperaturen (Prozesstemperaturen > 100°C) eine deutlich stärkere Linienstärke (mindestens Faktor 1.5) als bei niedrigen Temperaturen (Umgebungsbedingungen -20°C bis 60°C), oder umgekehrt. Dadurch kann die numerische Anpassung die Temperatur im entsprechenden Bereich anpassen und so die Temperaturen ermitteln und die Linien gut trennen.

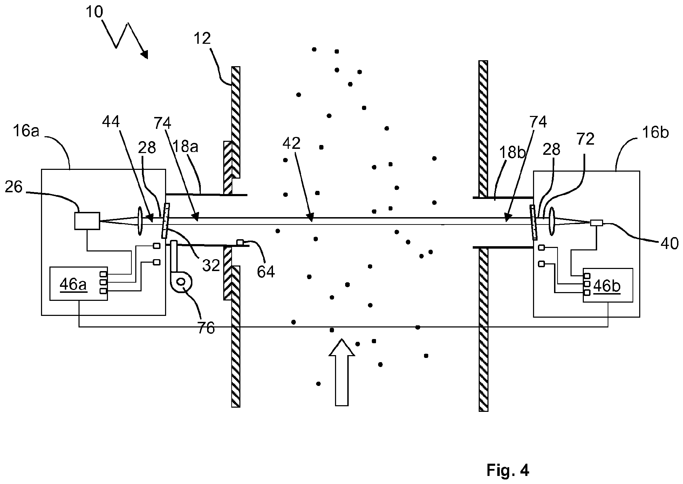

Eine weitere Ausführungsform des erfindungsgemäßen Messgeräts 10 zeigt Fig. 4. Dies ist eine sogenannte cross-duct Ausführung, bei der die Laserlichtquelle 26 und der Empfänger 40 auf gegenüberliegenden Seiten des Prozessbereichs angeordnet sein sind und das Messvolumen 42 sich über den ganzen Durchmesser des Prozesskanals 12 erstreckt. Die Laserlichtquelle 26 ist also in einem ersten Gehäuseteil 16a angeordnet und der Lichtstrahl 28 ist durch den Kanal 12 in einen zweiten Gehäuseteil 16b auf der gegenüberliegenden Seite geführt. In diesem zweiten Gehäuseteil 16b ist der Empfänger 40 angeordnet. Das bedeutet, dass mehrere Umgebungsluftvolumina vorhanden sind, nämlich wenigstens ein Umgebungsluftvolumen 44 im ersten Gehäuseteil 16a und ein Umgebungsluftvolumen 72 im zweiten Gehäuseteil. Analog zu dem Ausführungsbeispiel aus Fig. 3 können auch weitere Umgebungsluftvolumina 74 in Anflanschrohren 18a und 18b berücksichtigt werden. Die Auswerteeinheit ist ebenso zweigeteilt in eine Steuereinheit 46a, die den Sender ansteuert und eine Verarbeitungseinheit 46b, die die Empfangssignale verarbeitet.

## Patentansprüche

1. Verfahren zur Bestimmung einer Konzentration einer Gaskomponente in einem Prozessgas mit den Schritten
- Erzeugen eines Sendelichtstrahls (28) mit einer durchstimmbaren Laserlichtquelle (26), wobei ein durchstimmbarer Wellenlängenbereich ([λ1, λ2]) eine Absorptionslinie der zu messenden Gaskomponente enthält,
- Führen des Sendelichtstrahls (28) durch ein Messvolumen (42), in dem das zu messende Prozessgas mit der zu messenden Prozessgaskomponente vorliegt und durch ein Umgebungsluftvolumen, in dem Umgebungsluft mit nicht interessierendem Anteil an der Gaskomponente vorliegt,
- Empfangen des durch das Messvolumen (42,74) und das Umgebungsluftvolumen (44, 72) geführten Lichtstrahls (28) und Erzeugen von Empfangssignalen mit einem Empfänger (40),
- Erzeugen von Messwerten aus den Empfangssignalen, wobei die Messwerte ein Absorptionsspektrum (50) bilden und Bestimmen der Konzentration der Gaskomponente aus dem Absorptionsspektrum (50) mit einer Auswerteeinheit (46),
- wobei eine Messkurve an die Messwerte durch Bestimmen von ersten und zweiten Anpassungsparametern numerisch angepasst wird,
- wobei die ersten Anpassungsparameter die Linienposition und Linienbreite, sowie zusätzlich Linienfläche und/oder Linienhöhe der Gaskomponente im Prozess umfassen und die zweiten Anpassungsparameter die Linienposition und Linienbreite, sowie zusätzlich Linienfläche und/oder Linienhöhe der Absorptionslinie der Gaskomponente in Umgebungsluft umfassen und
- wobei Druck und Temperatur des Prozessgases erfasst werden zur Berechnung von Startwerten für die ersten Anpassungsparameter Linienposition und/oder Linienbreite und
- wobei Druck und Temperatur der Umgebungsluft erfasst werden zur Berechnung von Startwerten für die zweiten Anpassungsparameter Linienposition und/oder Linienbreite und
- mit diesen Startwerten die numerische Anpassung durchgeführt wird und aus den so ermittelten Anpassungsparametern die Konzentration bestimmt wird.

2. Verfahren nach Anspruch 1, **dadurch gekennzeichnet, dass** die Startwerte für die Anpassungsparameter mit Kenntnis von Fremdgasanteilen eingeschränkt werden.

3. Verfahren nach einem der vorhergehenden Ansprüche, **dadurch gekennzeichnet, dass** ein Startwert für den zweiten Anpassungsparameter Linienfläche und/oder Linienhöhe der Absorptionslinie der Gaskomponente in Umgebungsluft eingeschränkt wird auf Werte, die sich aus der Wegstrecke des Lichtstrahls durch das Umgebungsluftvolumen errechnen.

4. Verfahren nach einem der vorhergehenden Ansprüche, **dadurch gekennzeichnet, dass** eine Feuchte der Umgebungsluft mit einem Feuchtesensor erfasst wird und der Startwert des zweiten Anpassungsparameters Linienfläche und/oder Linienhöhe der Absorptionslinie der Gaskomponente in Umgebungsluft eingeschränkt wird auf Werte, die sich aus der gemessenen Feuchte bestimmen.

5. Verfahren nach einem der vorhergehenden Ansprüche, **dadurch gekennzeichnet, dass** für die ersten und zweiten Anpassungsparameter Toleranzen festgelegt sind, innerhalb derer diese beim numerischen Anpassen variieren können.

6. Verfahren nach einem der vorhergehenden Ansprüche, **dadurch gekennzeichnet, dass** das Absorptionsspektrum nach den Methoden der Wellenlängenmodulationsspektroskopie, der direkten Absorptionsspektroskopie oder der Dispersionsspektroskopie aufgenommen wird.

7. Verfahren nach einem der vorhergehenden Ansprüche, **dadurch gekennzeichnet, dass** das Absorptionsspektrum sich über mehr als eine Absorptionslinie der zu messenden Gaskomponente erstreckt und die Anzahl der Anpassungsparameter entsprechend erhöht ist.

8. Verfahren nach einem der vorhergehenden Ansprüche, **dadurch gekennzeichnet, dass** das Messvolumen und/oder das Umgebungsluftvolumen in zwei Bereiche mit unterschiedlichen Temperaturen aufgeteilt ist und jedem dieser Bereiche separate weitere Anpassungsparameter zugeordnet werden.

9. Gaskonzentrationsmessgerät zur Durchführung eines Verfahren nach einem der vorhergehenden Ansprüche zur Bestimmung einer Gaskonzentration in einem Prozessgas mit
- einer durchstimmbaren Laserlichtquelle (26) zur Erzeugung eines Sendelichtstrahls (28), wobei ein durchstimmbarer Wellenlängenbereich (λ1, λ2]) eine Absorptionslinie der zu messenden Gaskomponente enthält,
- einem Messvolumen (42), in dem das zu messende Prozessgas mit der zu messenden Gaskomponente vorliegt,
- einem Umgebungsluftvolumen (44, 72), in dem Umgebungsluft mit einem Anteil der Gaskomponente vorliegt der nicht interessiert,
- und der Sendelichtstrahl (28) sowohl das Messvolumen (42, 74) als auch das Umgebungsluftvolumen (44; 72) durchtritt,
- einem Empfänger zum Empfang des durch das Messvolumen (42, 74) und das Umgebungsluftvolumen (44; 72) geführten Lichtstrahls (28) und zum Erzeugen von Empfangssignalen,
- einer Auswerteeinheit (46), die dazu ausgebildet ist, aus den Empfangssignalen Messwerte zu erzeugen, die ein Absorptionsspektrum (50) bilden und aus dem Absorptionsspektrum (50) die Konzentration der zu messenden Gaskomponente zu bestimmen, **dadurch gekennzeichnet,**
- **dass** die Auswerteeinheit (46) dazu ausgebildet ist, zur numerischen Anpassung einer Meßkurve an die Messwerte erste Anpassungsparameter zu bestimmen, die Linienposition und Linienbreite, sowie zusätzlich Linienfläche und/oder Linienhöhe der Absorptionslinie der Gaskomponente im Prozess umfassen und zweite Anpassungsparameter zu bestimmen, die Linienposition und Linienbreite, sowie zusätzlich Linienfläche und/oder Linienhöhe der Absorptionslinie der Gaskomponente in der Umgebungsluft umfassen und
- ein Druck- und Temperatursensor (64) vorgesehen ist zur Erfassung von Druck und Temperatur des Prozessgases zur Berechnung von Startwerten für die ersten Anpassungsparameter Linienposition und/oder Linienbreite und
- ein Druck- und Temperatursensor (60) vorgesehen ist zur Erfassung von Druck und Temperatur der Umgebungsluft zur Berechnung von Startwerten für die zweiten Anpassungsparameter Linienposition und/oder Linienbreite und
- mit diesen Startwerten die numerische Anpassung erfolgt und
- die Auswerteeinheit (46) weiter ausgebildet ist, aus den so ermittelten Anpassungsparametern die Konzentration zu bestimmen.

10. Messgerät nach Anspruch 9, **dadurch gekennzeichnet, dass** Sender und Empfänger auf gegenüberliegenden Seiten des Prozessbereichs angeordnet sind.

11. Messgerät nach Anspruch 9, **dadurch gekennzeichnet, dass** ein Feuchtesensor und/oder ein Sensor für weitere dampf- oder gasförmigen Komponenten vorgesehen ist, um Einschränkungen für die Anpassungsparameterzu berechnen.

## Claims

1. Method for determining a concentration of a gas component in a process gas, comprising the steps of
- generating a transmitted light beam (28) with a tunable laser light source (26), wherein a tunable wavelength range ([λ1, λ2]) contains an absorption line of the gas component to be measured,
- guiding the transmitted light beam (28) through a measuring volume (42) in which the process gas to be measured with the process gas component to be measured is present and through an ambient air volume in which ambient air with a non-interesting proportion of the gas component is present,
- receiving the light beam (28) guided through the measuring volume (42, 74) and the ambient air volume (44, 72) and generating reception signals with a receiver (40),
- generating measured values from the received signals, the measured values forming an absorption spectrum (50) and determining the concentration of the gas component from the absorption spectrum (50) with an evaluation unit (46),
- wherein a measuring curve is numerically fitted to the measured values by determining first and second fitting parameters,
- wherein the first adjustment parameters comprise the line position and line width, and additionally line area and/or line height of the absorption line of the gas component in the process, and the second adjustment parameters comprise the line position and line width, and additionally line area and/or line height of the absorption line of the gas component in ambient air, and
- wherein the pressure and temperature of the process gas are recorded to calculate initial values for the first adjustment parameters and
- wherein pressure and temperature of the ambient air are detected for calculating initial values for the second adjustment parameters line position and/or line width and
- the numerical adjustment is carried out with these initial values and the concentration is determined from the adjustment parameters determined in this way.

2. Method according to claim 1, **characterised in that** the initial values for the adjustment parameters are restricted with knowledge of foreign gas components.

3. Method according to any one of the preceding claims, **characterised in that** an initial value for the second fitting parameter line area and/or line height of the absorption line of the gas component in ambient air is restricted to values calculated from the path length of the light beam through the ambient air volume.

4. Method according to one of the preceding claims, **characterised in that** a humidity of the ambient air is detected with a humidity sensor and the initial value of the second adjustment parameter line area and/or line height of the absorption line of the gas component in ambient air is restricted to values which are determined from the measured humidity.

5. Method according to any one of the preceding claims, **characterised in that** tolerances are defined for the first and second fitting parameters within which they may vary during numerical fitting.

6. Method according to any one of the preceding claims, **characterized in that** the absorption spectrum is recorded by the methods of wavelength modulation spectroscopy, direct absorption spectroscopy or dispersion spectroscopy.

7. Method according to one of the preceding claims, **characterised in that** the absorption spectrum extends over more than one absorption line of the gas component to be measured and the number of fitting parameters is increased accordingly.

8. Method according to one of the preceding claims, **characterised in that** the measurement volume and/or the ambient air volume is divided into two ranges with different temperatures and separate further adjustment parameters are assigned to each of these ranges.

9. Gas concentration measuring device for carrying out a method according to one of the preceding claims for determining a gas concentration in a process gas with
- a tunable laser light source (26) for generating a transmitted light beam (28), wherein a tunable wavelength range (λ1, λ2]) contains an absorption line of the gas component to be measured,
- a measuring volume (42) in which the process gas to be measured is present with the gas component to be measured,
- an ambient air volume (44, 72) in which ambient air is present with a proportion of the gas component that is not of interest,
- and the transmitted light beam (28) passes through both the measurement volume (42, 74) and the ambient air volume (44; 72),
- a receiver for receiving the light beam (28) guided through the measuring volume (42, 74) and the ambient air volume (44; 72) and for generating reception signals,
- an evaluation unit (46) which is designed to generate measured values from the received signals which form an absorption spectrum (50) and to determine the concentration of the gas component to be measured from the absorption spectrum (50),
**characterised in that**
- **in that** the evaluation unit (46) is designed to determine, for the numerical fitting of a measurement curve to the measured values, first fitting parameters which comprise line position and line width, and additionally line area and/or line height of the absorption line of the gas component in the process, and to determine second fitting parameters which comprise line position and line width, and additionally line area and/or line height of the absorption line of the gas component in the ambient air, and
- a pressure and temperature sensor (64) is provided for detecting pressure and temperature of the process gas for calculating initial values for the first adjustment parameters line position and/or line width and
- a pressure and temperature sensor (60) is provided for detecting pressure and temperature of the ambient air for calculating initial values for the second adjustment parameters line position and/or line width and
- the numerical adjustment is made with these initial values
- and the evaluation unit (46) is further designed to determine the concentration from the adjustment parameters determined in this way.

10. Measuring device according to claim 9, **characterised in that** the transmitter and receiver are arranged on opposite sides of the process area.

11. Measuring device according to claim 9, **characterised in that** a humidity sensor and/or a sensor for further vapour or gaseous components is provided in order to calculate constraints for the adjustment parameters.

## Revendications

1. Procédé pour déterminer une concentration d'un composant de gaz dans un gaz de procédé, comprenant les étapes
- générer un faisceau de lumière d'émission (28) avec une source de lumière laser accordable (26), dans laquelle une plage de longueurs d'onde accordable ([λ1, λ2]) contient une ligne d'absorption du composant de gaz à mesurer,
- guider le faisceau de lumière d'émission (28) à travers un volume de mesure (42) dans lequel se trouve le gaz de procédé à mesurer avec le composant de gaz de procédé à mesurer et à travers un volume d'air ambiant dans lequel se trouve de l'air ambiant avec une proportion non intéressante du composant de gaz,
- recevoir le faisceau de lumière (28) guidé à travers le volume de mesure (42, 74) et le volume d'air ambiant (44, 72) et générer des signaux de réception avec un récepteur (40),
- générer des valeurs mesurées à partir des signaux de réception, les valeurs mesurées formant un spectre d'absorption (50) et déterminer la concentration du composant de gaz à partir du spectre d'absorption (50) avec une unité d'évaluation (46),
- dans lequel une courbe de mesure est ajustée numériquement aux valeurs mesurées en déterminant des premiers et deuxièmes paramètres d'ajustement,
- dans lequel les premiers paramètres d'adaptation comprennent la position et la largeur de ligne, ainsi qu'en outre la surface et/ou la hauteur de ligne de la ligne d'absorption du composant de gaz dans le processus, et les deuxièmes paramètres d'adaptation comprennent la position et la largeur de ligne, ainsi qu'en outre la surface et/ou la hauteur de ligne de la ligne d'absorption du composant de gaz dans l'air ambiant, et
- dans lequel la pression et la température du gaz de procédé sont enregistrées pour calculer les valeurs initiales des premiers paramètres d'adaptation et
- dans lequel la pression et la température de l'air ambiant sont détectées pour calculer les valeurs initiales des deuxièmes paramètres d'adaptation, position de la ligne et/ou largeur de la ligne et
- l'ajustement numérique est effectué avec ces valeurs initiales et la concentration est déterminée à partir des paramètres d'ajustement ainsi déterminés.

2. Procédé selon la revendication 1, **caractérisé en ce que** les valeurs initiales des paramètres d'adaptation sont limitées en fonction de la connaissance des composants de gaz étrangers.

3. Procédé selon l'une des revendications précédentes, **caractérisé en ce qu'**une valeur initiale pour le deuxième paramètre d'ajustement la surface de ligne et/ou la hauteur de ligne de la ligne d'absorption du composant de gaz dans l'air ambiant est limitée à des valeurs calculées à partir de la longueur du trajet du faisceau de lumière à travers le volume d'air ambiant.

4. Procédé selon l'une des revendications précédentes, **caractérisé en ce qu'**une humidité de l'air ambiant est détectée à l'aide d'un capteur d'humidité et la valeur initiale du deuxième paramètre d'adaptation la surface de ligne et/ou la hauteur de ligne de la ligne d'absorption du composant de gaz dans l'air ambiant est limitée à des valeurs qui sont déterminées à partir de l'humidité mesurée.

5. Procédé selon l'une des revendications précédentes, **caractérisé en ce que** des tolérances sont définies pour les premiers et deuxièmes paramètres d'ajustement, à l'intérieur desquelles ils peuvent varier lors de l'ajustement numérique.

6. Procédé selon l'une des revendications précédentes, **caractérisé en ce que** le spectre d'absorption est enregistré par les méthodes de spectroscopie par modulation de longueur d'onde, de spectroscopie par absorption directe ou de spectroscopie par dispersion.

7. Procédé selon l'une des revendications précédentes, **caractérisé en ce que** le spectre d'absorption s'étend sur plus d'une ligne d'absorption du composant de gaz à mesurer et le nombre de paramètres d'ajustement est augmenté en conséquence.

8. Procédé selon l'une des revendications précédentes, **caractérisé en ce que** le volume de mesure et/ou le volume d'air ambiant est divisé en deux plages avec des températures différentes et des paramètres d'adaptation supplémentaires distincts sont affectés à chacune de ces plages.

9. Dispositif de mesure de la concentration de gaz pour effectuer un procédé selon l'une des revendications précédentes pour la détermination d'une concentration de gaz dans un gaz de traitement avec
- une source de lumière laser accordable (26) pour générer un faisceau de lumière (28), dans laquelle une plage de longueurs d'onde accordable (λ1, λ2]) contient une ligne d'absorption du composant de gaz à mesurer,
- un volume de mesure (42) dans lequel se trouve le gaz de procédé à mesurer avec le composant de gaz de procédé à mesurer,
- un volume d'air ambiant (44, 72) dans lequel se trouve de l'air ambiant avec une proportion non intéressante du composant de gaz,
- et le faisceau de lumière (28) traverse aussi bien le volume de mesure (42, 74) que le volume d'air ambiant (44; 72),
- un récepteur pour recevoir le faisceau de lumière (28) guidé à travers le volume de mesure (42, 74) et le volume d'air ambiant (44; 72) et pour générer des signaux de réception,
- une unité d'évaluation (46) qui est conçue pour générer des valeurs de mesure à partir des signaux de réception qui forment un spectre d'absorption (50) et pour déterminer la concentration du composant de gaz à mesurer à partir du spectre d'absorption (50),
**caractérisé en ce que**
- **en ce que** l'unité d'évaluation (46) est conçue pour déterminer, pour l'adaptation numérique d'une courbe de mesure aux valeurs mesurées, des premiers paramètres d'adaptation qui comprennent la position et la largeur de ligne, ainsi qu'en outre la surface et/ou la hauteur de ligne de la ligne d'absorption du composant de gaz dans le processus, et pour déterminer des deuxièmes paramètres d'adaptation qui comprennent la position et la largeur de ligne, ainsi qu'en outre la surface et/ou la hauteur de ligne de la ligne d'absorption du composant de gaz dans l'air ambiant et
- un capteur de pression et de température (64) est prévu pour détecter la pression et la température du gaz de traitement pour calculer les valeurs initiales pour les premiers paramètres d'adaptation position de ligne et/ou largeur de ligne et
- un capteur de pression et de température (60) est prévu pour détecter la pression et la température de l'air ambiant afin de calculer les valeurs initiales pour les deuxièmes paramètres d'adaptation position de ligne et/ou largeur de ligne et
- l' adaptation numérique est effectué avec ces valeurs initiales et
- l'unité d'évaluation (46) est en outre conçue pour déterminer la concentration à partir des paramètres d'adaptation ainsi déterminés.

10. Dispositif de mesure selon la revendication 9, **caractérisé en ce que** l'émetteur et le récepteur sont disposés sur des côtés opposés de la zone de traitement.

11. Dispositif de mesure selon la revendication 9, **caractérisé en ce qu'**un capteur d'humidité et/ou un capteur pour d'autres composants de vapeur ou de gaz est prévu pour calculer les contraintes pour les paramètres d'adaptation.
